# EUROPEAN PATENT APPLICATION

(11) **EP 2 562 614 A2**
(43) Date of publication of application: **27.02.2013**
(21) Application number: 12179989.4
(22) Date of filing: 10.08.2012
(51) Int. Cl.: G05B 23/02, B66B 5/00

(54) **Control device of control system and elevator systems**

(30) Priority: 25.08.2011 JP 2011183387
(71) Applicant: Hitachi Ltd., Tokyo 100-8280 (JP)
(72) Inventor: Saeki, Takashi, Tokyo, 100-8220 (JP); Nakamura, Kozo, Tokyo, 100-8220 (JP)
(74) Representative: MERH-IP Matias Erny Reichl Hoffmann

(57) **Abstract**

In the conventional systems, it is impossible to detect faults until they appear in the operation of the operation amount adjustment mechanism. It has therefore been difficult to detect how much a fault has progressed before it actually takes shape. The operation amount adjustment mechanism is considered to be operating normally until a fault is diagnosed from the operation information. Once the fault occurs, the control system can be brought to an emergency stop in the worst-case scenario.

A control device for use with a control system of the present invention includes an evaluation means for evaluating a normal control signal Sg14 in effect when the control system is in normal operation and an actual control signal currently in effect, and a determination means for determining that the control equipment associated with the control signal Sg11 includes a fault cause or a failure cause if a predetermined degree of association is absent between the normal control signal Sg14 and the actual control signal upon evaluation by the evaluation means. Thus, it is possible to make fault predictions.

## Description

### FIELD OF THE INVENTION

The present invention relates to a control device for use with control systems typified by elevator systems in buildings, power plant systems, and water and sewage systems. More particularly, the invention relates to a control device for control systems and equipped with a prediction diagnosis function for diagnosing the control system as potentially having faults or failures before they actually occur.

### BACKGROUND OF THE INVENTION

Progress has been made in the development of techniques for detecting faults and failures (simply called faults hereunder) of a control device for use with control systems, i.e., techniques for the maintenance of (protecting and keeping safe of) the control device such as an operation amount adjustment mechanism for motors and flow rate control valves.

For example, for use with the control device that drives and controls its operation amount adjustment mechanism to operate a control system based on the operation information coming from operation information sensors, there have been proposed numerous fault sensing methods for diagnosing the target control system based on the operation information resulting from the drive and control thereof by the control device working in conjunction therewith.

Also proposed are methods for detecting faults by storing the operation information resulting from the drive and control of the control device in a state considered normal in terms of design values and initial status and by comparing the stored information with the operation information stemming from the currently effected drive and control.

Representative examples of the above-mentioned fault sensing methods are disclosed in Japanese Unexamined Patent Publications Nos. Hei 6(1994)-1556 (called Patent Literature 1 hereunder), Hei 6(1994)-167591 (Patent Literature 2), Hei 9(1997)-6432 (Patent Literature 3), and 2003-95561 (Patent Literature 4).

The technique disclosed in Patent Literature 1 involves detecting faulty operations by collecting operation information from the control device of elevators and comparing the collected information with past operation information stored beforehand.

The technique disclosed in Patent Literature 2 involves storing in a storage device beforehand the sensor information from various sensors of a nuclear power plant in its normal state and comparing the stored information with the sensor information desired to be diagnosed in order to detect faults of the nuclear power plant.

The technique disclosed in Patent Literature 3 involves comparing the actual position or velocity information on a processing machine with the calculated values of the internal state based on an internal model so as to detect faults of the machine.

The technique disclosed in Patent Literature 4 concerns remote diagnosis of elevator doors and involves comparing the voltages and currents stemming from door opening/closing patterns before and after their adjustments in order to detect faults.

According to the technique of Patent Literature 1, faulty operations are detected by comparing the actual operation information on the elevators with previously stored operation information. That means a fault cannot be detected until it appears in the operation information. During apparently normal operation, the faulty state may advance but cannot be detected.

According to the technique of Patent Literature 2, plant faults are detected by comparing the sensor information in effect when the nuclear power plant is in the normal state with the sensor information desired to be diagnosed. The accuracy and reliability of fault detection are dependent on the types and number of the sensors in use. It follows that if it is desired to collect the operation information of high accuracy, the load of data collection and processing and the amount of data to be collected can become inordinately high.

According to the technique of Patent Literature 3, faults are detected by comparing the actual position or velocity information with the calculated values of the internal state based on a predetermined model. This technique is not for general-purpose use because it can be applied only to setups of which the internal state model can be established so as to measure the internal state.

According to the technique of Patent Literature 4, faults are detected by comparing the data on the voltages and currents regarding the door opening/closing patterns before and after their adjustments are made. Because the changes in actual door movements are compared for fault detection, any fault that has yet to appear in terms of door movements cannot be detected.

To sumup, the diverse methods for error detection outlined above are incapable of detecting faults until they appear in the operation of the operation amount adjustment mechanism. With these methods, it has been difficult to detect how much a fault has progressed before it actually takes shape.

That is, according to these methods, the operation amount adjustment mechanism is driven and controlled on the basis of the operation information from operation information sensors. It follows that the drive and operation of the operation amount adjustment mechanism are solely dependent on controlled variables (operation amounts) obtained by a predetermined calculation technique from the operation information. Inother words, the flow of control involved absorbs predictions of a fault cause (that has yet to actually take shape as a fault) in the control device such as the operation amount adjustment mechanism, the predictions being included in the operation information.

For that reason, the operation amount adjustment mechanism is considered to be operating normally until a fault is diagnosed from the operation information. Once the fault occurs, the control system can be brought to an emergency stop in the worst-case scenario.

If it is possible to detect whether a fault is likely to occur before it actually does, it can be a significantly effective maintenance technique. Making such fault predictions can avert the occurrence of an actual fault and other serious troubles that could bring the control device--and the control system by extension--to a halt.

It is therefore an object of the present invention to provide a control device of a control system for averting troubles of the control system including the control device by making fault predictions before a fault actually occurs in the control device that forms part of the control system.

### SUMMARY OF THE INVENTION

In carrying out the present invention and according to one aspect thereof, there is provided a control device for use with a control system. The control device calculates operation amounts of control equipment of the control system based on output from sensors detecting operation information and other information on the control system, the control device further outputting the operation amounts to the control equipment as a control signal. The control device includes an evaluation means for evaluating a normal control signal in effect when the control system is in normal operation and an actual control signal currently in effect, and a determination means for determining that the control equipment associated with the control signal includes a fault cause or a failure cause if a predetermined degree of association is absent between the normal control signal and the actual control signal upon evaluation by the evaluation means.

According to the present invention, even if the control system is currently in normal operation, it is possible to make fault predictions indicative of a fault about to occur in the control system. With faults thus predicted before they actually trigger an emergency stop or other troubles of the control system, the stability of the control system in operation is enhanced.

### BRIEF DESCRIPTION OF THE DRAWINGS

Fig. 1 is a block diagram of a plant system as one embodiment (first embodiment) of the present invention;
Fig. 2 is a block diagram of a control signal collection device shown in Fig. 1;
Fig. 3 is a block diagram of a fault prediction and detection device shown in Fig. 1;
Fig. 4 is a block diagram of a plant system as another embodiment (second embodiment) of the present invention;
Fig. 5 is a block diagram of a comparison signal storage device shown in Fig. 4;
Fig. 6 is a block diagram of a plant system as another embodiment (third embodiment) of the present invention;
Fig. 7 is a block diagram of a fault prediction and detection device shown in Fig. 6;
Fig. 8 is a block diagram of an elevator system as another embodiment (fourth embodiment) of the present invention;
Fig. 9 is a specific diagnosis flowchart of the elevator system shown in Fig. 8; and
Fig. 10 is a schematic view showing a typical structure of the elevator as part of the elevator system indicated in Fig. 8.

### DETAILED DESCRIPTION OF THE PREFERRED EMBODIMENTS

A plurality of embodiments of the present invention will now be described in reference to the accompanying drawings. The first embodiment to be discussed below outlines a plant system as a typical control system.

### [First embodiment]

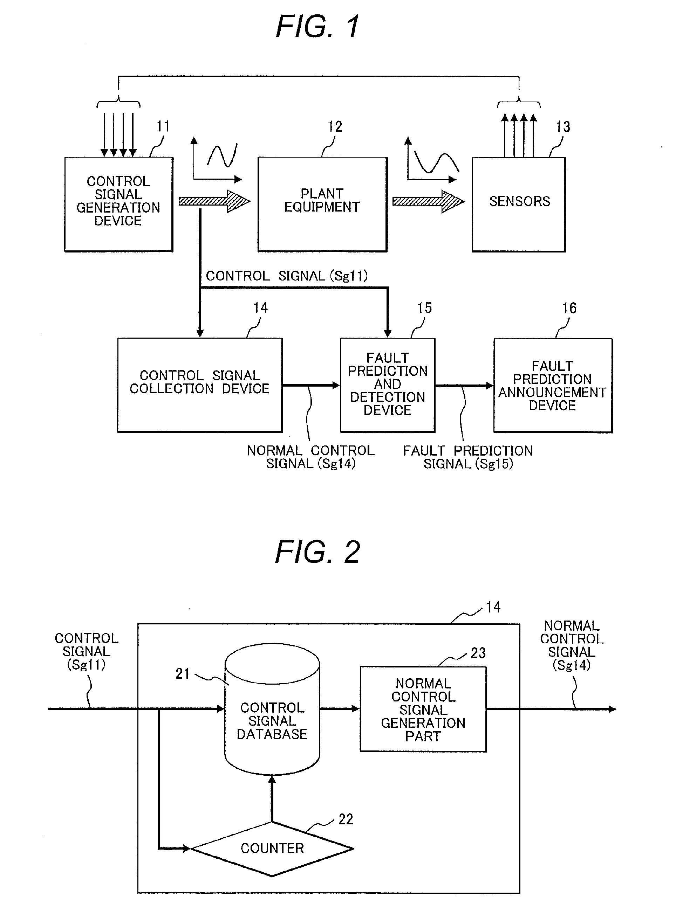

Fig. 1 is a block diagram of a plant system that has a fault prediction diagnosis function. The plant system generally includes a control signal generation device 11, plant equipment 12 that runs or operates the plant using control signals from the control signal generation device 11, and a group of sensors 13 that detect operation status of the plant resulting from the environment and operation of the plant.

The control signal generation device 11 is made up of a computer that includes an input/output part, a storage part, and a calculation part. As such, the control signal generation device 11 has a function of calculating and outputting a control signal Sg11 for operating the plant equipment 12.

The control signal Sg11 is obtained by getting the sensors 13 to detect operation information that varies with the plant environment and plant operation status and to input the detected information to the control signal generation device 11. Specifically, the sensors 13 detect ambient parameters such as temperature, velocity, weight, position and density as well as internal status parameters in effect when the plant is in operation, the parameters being defined collectively as the operation information.

The control signal Sg11 is generated by the control signal generation device 11 performing predetermined calculations on the operation information obtained from the sensors 13. Specifically, the control signal Sg11 is generated using techniques such as feed-forward calculation or feedback calculation.

The actual control signal Sg11 obtained by the control signal generation device 11 is sent to the plant equipment 12. The plant equipment 12 is an instrument that adjusts physical operation amounts for operating the plant. Specifically, the plant equipment 12 is an adjustment mechanism such as motors, flow control valves and the like. Thus the control signal Sg11 represents the operation amounts for operating the adjustment mechanism. Specifically, the adjustment mechanism is driven by controlling its operation amounts in accordance with the magnitudes of the current and voltage in effect as well as the temporal duration of pulses applied.

The plant system constituted by the control signal generation device 11, plant equipment 12 and sensors 13 is then operated to accomplish the purpose it is designed for.

Meanwhile, it is important for this type of plant system to avert serious troubles such as an emergency stop by predicting faulty conditions at an early stage as explained above.

If it is possible to predict--not detect belatedly--faults before they actually occur, that can be a significant advantage in normally maintaining the system.

The above-mentioned advantage is explained below in more detail. In Fig. 1, the plant system further includes a control signal collection device 14, a fault prediction and detection device 15, and a fault prediction announcement device 16.

The control signal collection device 14 and fault prediction and detection device 15 are configured to admit the input of the control signal Sg11 from the control signal generation device 11. The fault prediction and detection device 15 compares the control signal Sg11 with the output from the control signal collection device 14 to determine a predicted fault state of the control device which is associated at least with the control signal. When the determination reveals an impending fault, the fault prediction announcement device 16 announces the state to the operator and other personnel involved.
As shown in Fig. 2, the control signal collection device 14 includes a control signal database 21, a counter 22, and a normal control signal generation part 23. The control signal Sg11 is input to the control signal database 21 and counter 22.
The function of the control signal collection device 14 is to generate a normal control signal Sg14 in effect in the normal state. With this embodiment, the control signal in effect when the plant equipment 12 is in its initial state is stored into the control signal database 21.
As control signals Sg11 arrive one after another at the control signal database 21 from the control signal generation device 11, they are written consecutively to predetermined addresses in the database. Every time the control signal Sg11 arrives at the counter 22, the value on the counter 22 is incremented by one. When the number of control signals Sg11 stored into the control signal database 21 reaches a predetermined threshold value, no further control signal Sg11 is allowed to be stored.

That is, the counter 22 detects arrivals of the input control signal Sg11, counts the input count, and outputs accordingly an enable or disable trigger signal enabling or disabling storage into the control signal database 21. When the input signal count is below the predetermined threshold value, the counter 22 sends the enable trigger signal to the control signal database 21 to enable storage therein; when the input signal count exceeds the predetermined threshold value, the counter 22 sends the disable trigger signal to the control signal database 21 to disable storage therein. In this manner, the counter 22 provides storage management.

As a result, with the initial state of the control device (i.e., normal state before normal operation of the system) terminated, it is determined that the control signals from the normal state are collected. As the control signals of the initial state, it is sufficient to use the signals from the plant system installed for the first time and test-operated, or the signals from the initial state of normal operation.

The control signal database 21 admits the input of the control signal Sg11 and the enable/disable trigger signal from the counter 22. Upon receipt of the enable trigger signal for enabling storage, the control signal database 21 writes the control signal Sg11 to a predetermined address. On the other hand, given the disable trigger signal for disabling storage, the control signal database 21 does not store the control signal Sg11. Thus as long as the enable trigger signal is being input, control signals Sg11 are stored and accumulated successively into the control signal database 21.

Incidentally, the control signal Sg11 can be used selectively depending on the type of the operation amount adjustmentmechanisminuse. For motors, a motor control signal (e.g., current and/or voltage value) may be used; for flow rate control values, a solenoid valve signal (e.g., energizing time) may be utilized. It will be best for a single type of control signal Sg11 to be used in making fault predictions of the control system. If it is impossible to make fault predictions using the single type of control signal Sg11, fault predictions can be made using a plurality of types of control signals Sg11 from operation amount adjustment mechanisms.

The accumulated control signals Sg11 are sent to the normal control signal generation part 23 at a suitable timing. The normal control signal generation part 23 generates a normal control signal Sg14 using a predetermined calculation technique. For example, the normal control signal Sg14 obtained by the predetermined calculation technique may be a mean value derived from the summing of multiple accumulated control signals or a center value from among a plurality of control signals. Alternatively, other diverse calculation techniques may be utilized. The point is that the obtained signal should be used as the normal control signal.

The normal control signal generation part 23 may perform calculations on the normal control signal Sg14 at the above-mentioned suitable timing. Alternatively, the calculated normal control signal Sg14 may be held in storage so that it may be retrieved at a time of comparison by the fault prediction and detection device 15, to be discussed below, for use thereby.

Next, the normal control signal Sg14 obtained by the normal control signal generation part 23 is sent to the fault prediction and detection device 15. The fault prediction and detection device 15 evaluates the degree of association between the normal control signal Sg14 and the input control signal Sg11 to determine whether there are indications of an impending fault.

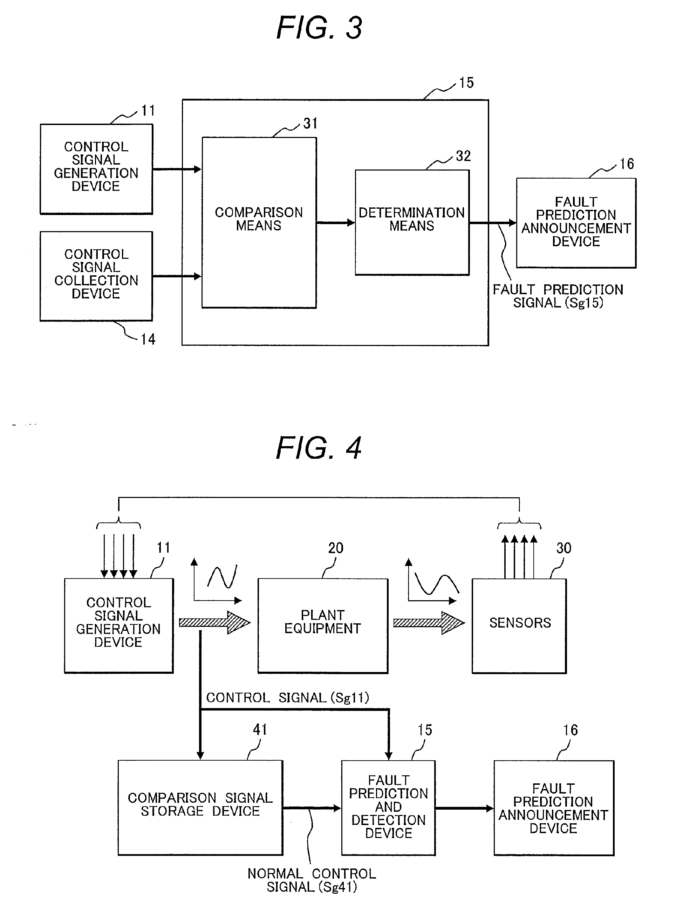

The fault prediction and detection device 15 includes a comparison means 31 and a determination means 32 as shown in Fig. 3. The comparison means 31 has the function of an evaluation means evaluating the degree of association (i.e., difference) between the control signal Sg11 and the normal control signal Sg14 in terms of magnitude or correlation, for example. The determination means 32 has the function of determining how likely a fault will occur on the basis of the evaluation.

The control signal Sg11 output from the control signal generation device 11 and the normal control signal Sg14 from the control signal collection device 14 are input to the comparison means 31. The comparison means 31 then compares or evaluates the control signal Sg11 and normal control signal Sg14 to obtain an evaluation value thereof.

The evaluation value in this case is typically obtained as the degree of similarity between the signals in terms of the Euclidean distance or Hamming distance between n-dimensional vectors, or as the correlation coefficient between the signals based on principal component analysis. Alternatively, other suitable evaluation methods may be selected and carried out in keeping with the control system of interest.

The evaluation value obtained by the comparison means 31 is forwarded to the determination means 32 located downstream. The determination means 32 determines whether a fault is likely to occur. Upon making a prediction that a fault may be imminent, the determination means 32 outputs a fault prediction signal Sg15. That is, the determination is made so that the control equipment associated with at least the control signal of interest includes a fault cause or a failure cause.

For example, the determination means 32 determines whether a fault is imminent depending on whether the input evaluation value is found to exceed a predetermined threshold value upon comparison therebetween. Obviously, a plurality of threshold values may be prepared, and as many degrees of significance in fault prediction may be given to the evaluation values ranked according to the different threshold values. For example, upon fault prediction, (1) the highest-ranked evaluation value may signify that a fault is imminent; (2) the second highest-ranked evaluation value may signify that a fault is likely to occur in the near future; and (3) the third highest-ranked evaluation value may signify that there may be some time before the occurrence of a fault.

The fault prediction signal Sg15 is sent to the fault prediction announcement device 16. In turn, the fault prediction announcement device 16 gives a message that a fault is likely to occur to the operator and other personnel involved, the message being announced by voice or by displaying fault predictions on a display screen of the system. The announcement allows the operator to become aware of the predicted fault.

Where the normal control signal Sg14 is to be compared with the control signal Sg11, it is important to keep the operation state of the control system substantially constant for each of the signals. That is, the operation state in which the normal control signal Sg14 is generated by the normal control signal generation part 23 should be substantially the same as the operation state in which the control signal Sg11 is provided for comparison.

According to the first embodiment explained above, the normal control signal Sg14 is generated based on the initial control signal Sg11 of the control system. The control signal Sg11 generated in the course of the operation of the control system is then compared with the normal control signal Sg14 for evaluation and determination, whereby fault predictions are made about the control system. This makes it possible to detect in advance a fault before it actually causes serious troubles such as an emergency stop of the control system, thereby promising to boost the stability of the control system in operation.

### [Second embodiment]

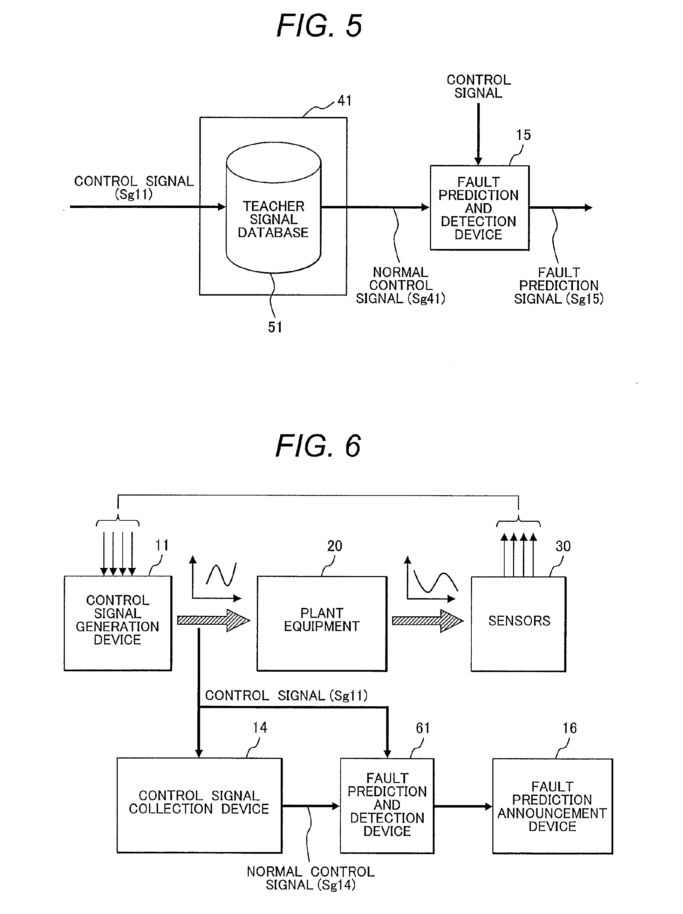

Next, the second embodiment of the present invention is explained in reference to Figs. 4 and 5. Fig. 4 is a block diagram of a plant system that has a fault prediction diagnosis function. This plant system is assumed to have substantially the same configuration as that of the plant system shown in Fig. 1. What makes the plant system of Fig. 4 different from that of Fig. 1 is the manner in which the normal control signal is generated.

A comparison signal storage device 41 shown in Fig. 4 is made up of a teacher signal database 51 as indicated in Fig. 5. The teacher signal stored in the teacher signal database 51 is read therefrom at the same time that the control signal Sg11 arrives from the control signal generation device 11. The retrieved teacher signal is sent to the fault prediction and detection device 15.

The teacher signal in the teacher signal database 51 corresponds to a design reference value associated with the control signal Sg11 or to a control reference value stipulated in the specification. The reference value is retrieved from storage and used as a normal control signal Sg41.

As mentioned above, upon comparison between the normal control signal Sg41 and the control signal Sg11, it is important to keep the operation state of the control system substantially constant for each of the signals. That is, what is important is that the operation state in which the teacher signal (i.e., reference value) is stipulated should be substantially the same as the operation state in which the control signal for comparison with the teacher signal is generated.

Then the normal control signal Sg41 read from the teacher signal database 51 upon arrival of the control signal Sg11 is sent to the fault prediction and detection device 15. The fault prediction and detection device 15 compares the normal control signal Sg41 with the control signal Sg11 coming from the control signal generation device 11 to obtain an evaluation value.

The function, the workings, etc., of the fault prediction and detection device 15 in Fig. 4 are the same as those of the fault prediction and detection device 15 in Fig. 1 and thus will not be discussed further.

Thereafter the fault prediction signal Sg15 is sent to the fault prediction announcement device 16. In turn, the fault prediction announcement device 16 gives a message that a fault is likely to occur to the operator and other personnel involved, the message being announced by voice or by displaying fault predictions on a display screen of the system. The announcement allows the operator to become aware of the predicted fault.

Alternatively, the teacher signal database 51 may store a plurality of teacher signals corresponding to actual operation states of the control system. More specifically, the changes in a given operation state parameter and a plurality of teacher signals (reference values) associated therewith may be stored as a table in the database. A teacher signal corresponding to the magnitude of the operation state parameter detected by sensors may then be retrieved from the table for comparison and determination by the fault prediction and detection device 15.

As another alternative, the operation time of the control systemmay be used as a parameter. Aplurality of teacher signals in the same operation state may be obtained beforehand in keeping with changes in the parameter over time. Specifically, the number of times the control signal has arrived may be counted and the teacher signal corresponding to the signal arrival count may be retrieved for teacher signal use. Or the elapsed time may be measured and the teacher signal corresponding to the measured time may be retrieved for use.

According to the second embodiment described above, the normal control signal Sg41 is generated from the teacher signal obtained beforehand. The actual control signal Sg11 generated from the operation of the control system is compared with the normal control signal Sg41 for evaluation and determination, whereby fault predictions are made about the control system. This makes it possible to detect beforehand a fault before it actually causes serious troubles such as an emergency stop of the control system, thereby promising to enhance the stability of the control system in operation.

### [Third embodiment]

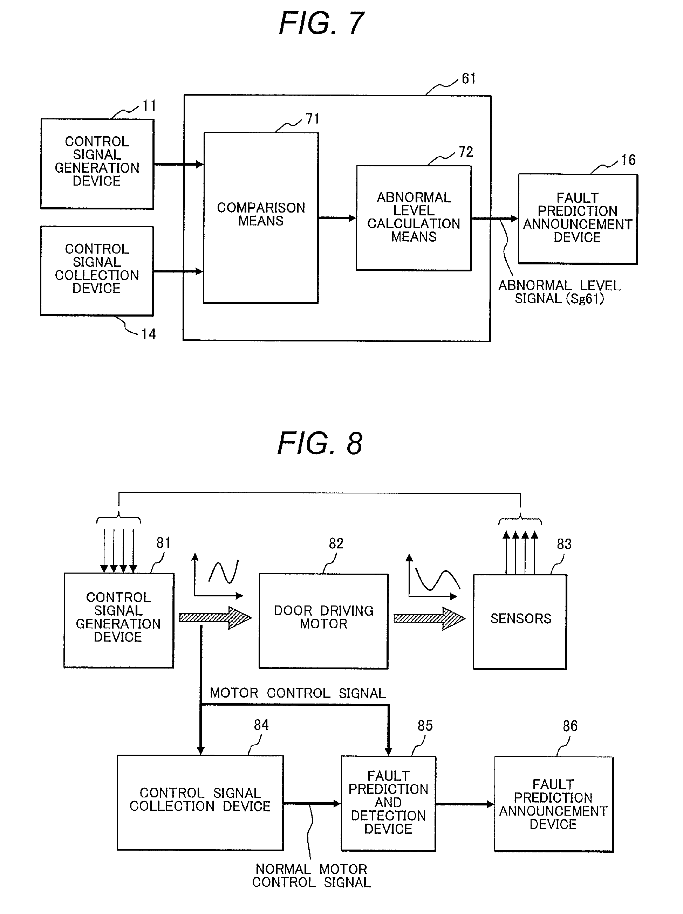

The third embodiment of the present invention is explained next in reference to Figs. 6 and 7. Fig. 6 is a block diagram of another plant system that also has a fault prediction diagnosis function. This plant system is assumed to have substantially the same configuration as that of the plant system shown in Fig. 1. What makes the plant system of Fig. 6 different from that of Fig. 1 is the configuration of a fault prediction and detection device 61.

The fault prediction and detection device 61 in Fig. 6 includes a comparison means 71 and an abnormal level calculation means 72 as shown in Fig. 7. The fault prediction and detection device 61 is configured to output an abnormal level signal Sg61. The function, the workings, etc., of the comparison means 71 are the same as those of the comparison means 31 in Fig. 3 and thus will not be discussed further.

The evaluation value from the comparison means 71 is sent to the abnormal level calculation means 72. Based on the evaluation value thus received, the abnormal level calculation means 72 calculates the abnormal level of the control signal. The abnormal level of the control signal varies with the evaluation value. Specifically, the abnormal level of the control signal may be obtained on the basis of the degree of similarity between the normal control signal Sg14 and the control signal Sg11 in terms of the Euclidean distance or Hamming distance therebetween. For example, every time the control signal Sg11 arrives, the difference between the control signal Sg11 and the normal control signal Sg14 may be calculated. A predetermined number of the differences may be added up to find an accumulated value. The abnormal level may then be obtained by determining how different the accumulated value is from a predetermined threshold value. Alternatively, every time the control signal Sg11 comes in, a determination may be made to see whether the control signal Sg11 is normal or abnormal. After a predetermined number of the determinations have been made, the normal or abnormal control signals may be added up to find a signal count. The abnormal level may then be obtained by determining how different the signal count is from a predetermined threshold count.

The abnormal level calculated by the abnormal level calculation means 72 is sent to the fault prediction announcement device 16. Accordingly, the fault prediction announcement device 16 gives a message that a fault is likely to occur to the operator and other personnel involved, the message being announced by voice or by displaying fault predictions on a display screen of the system. The announcement allows the operator to become aware of the predicted fault.

According to the third embodiment explained above, the normal control signal Sg14 is generated based on the initial control signal Sg11 of the control system. The control signal Sg11 generated in the course of the operation of the control system is then compared with the normal control signal Sg14 for evaluation and determination, whereby fault predictions are made about the control system. This makes it possible to detect in advance a fault before it actually causes serious troubles such as an emergency stop of the control system, thereby promising to boost the stability of the control system in operation.

Furthermore, because the abnormal level is obtained with the third embodiment, it is possible to determine beforehand how advanced the potential fault of the control system is. This promises to provide detailed and meticulous maintenance and management of the control system.

### [Fourth embodiment]

The fourth embodiment of the present invention is explained next in reference to Figs. 8 through 10. Fig. 8 is a block diagram of an elevator system that has a fault prediction diagnosis function. This is an example in which the invention is applied particularly to the fault prediction diagnosis of the opening and closing of the doors attached to the elevator cage.

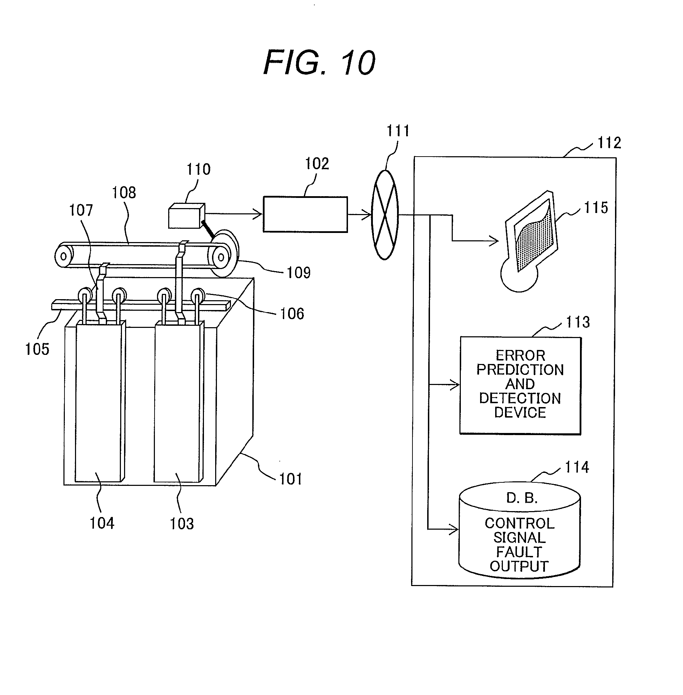

As shown in Fig. 10, the elevator system has a known system configuration in which the operation of a cage 101 housed in a hoistway (not shown) is managed from a control panel 102 also attached to the hoistway.

The cage 101 has two elevator opening/closing doors 103 and 104 which, with their guide wheels 106, travel along rails 105 mounted on top of the cage 101. The elevator opening/closing doors 103 and 104 are linked to a belt mechanism 108 by means of link straps 107. The elevator opening/closing doors 103 and 104 are driven by the belt mechanism 108 in the opening or closing direction. The belt mechanism 108 is driven for its part by a motor 109 under control of a drive circuit 110. The drive circuit 110 is attached to the hoistway.

Also, the control panel 102 serves to determine the operation amounts of the drive circuit 110. The outputs from various sensors are input to the control panel 102.

The control panel 102 is linked with an information monitoring center 112 via a communication network 111. The information monitoring center 112 includes a control signal fault output (= fault prediction) detection device 113 equipped with the functions of a control signal collection device 84 and a fault prediction and detection device 85 shown in Fig. 8, and a display device 115 that displays or announces the result of the detection by the control signal fault output detection device 113. The information monitoring center 112 also includes a control signal fault output (= fault prediction detection signal) database 114. Thefaultpredictiondetection result output from the control signal fault output detection device 113 may be stored in the database 114 and later retrieved therefrom for isolating the cause of a fault that has actually taken place.

Whereas the control signal fault output detection device 113 was shown above to be included in the information monitoring center 112, the device 113 may be attached alternatively to the control panel 102. In this setup, the result of fault prediction and detection may be transmitted to the information monitoring center 112 via the communication network 111. Ordinarily, the latter case is preferred because the setup is more rational from the viewpoint of maintaining and inspecting the control panel 102.

To resume the detailed description of the fourth embodiment by referring again to Fig. 8, the elevator system utilizes opened/closed door position sensors, a velocity sensor, and a torque sensor as operation information sensors 83 for detecting the operation state of elevator opening/closing doors 82 (corresponding to the doors 103 and 104 in Fig. 10).

The opened/closed door position sensors may be known resistance type sensors that detect the positions of the elevator opening/closing doors. The velocity sensor may be a known magnetic resistance type rotation sensor that detects the rotational velocity of the motor 109. The torque sensor may be a known current sensor that detects the rotation torque of the motor 109.

The signals from the opened/closed door position sensors, velocity sensor, and torque sensor are input to a control signal generation device 81 (corresponding to the control panel 102 in Fig. 10). In turn, the control signal generation device 81 outputs as the control signal a motor control signal for driving the elevator opening/closing doors 103 and 104.

The motor control signal is sent to the control signal collection device 84. This is an initial motor control signal in effect when, to follow the example of the first embodiment shown in Fig. 1, the elevator system is installed for the first time in the building. As shown in Fig. 1, a plurality of the initial motor control signals are stored into the control signal database 21 in synchronism with the arrivals of the control signals. The normal control signal generation part 23 performs averaging or other suitable calculations on the received signals to generate a normal control signal.

Meanwhile, in the course of the operation of the elevator system over time, it might happen that for some reason, the elevator opening/closing doors 103 and 104 fail to reach their normal positions upon opening or closing. In such a case, it is necessary to remedy the situation to operate the elevator opening/closing doors 103 and 104 normally.

In order to operate the elevator opening/closing doors 103 and 104 normally, the control signal generation device 81 corrects the motor control signal so that the corrected motor control signal, now different from the initial normal control signal, will drive the motor 109 to normally actuate the elevator opening/closing doors 103 and 104.

It follows that even if the elevator opening/closing doors 103 and 104 are operating in an apparently normal manner, they may in fact have the potential to cause a fault.

To counter the apparently normal but potentially faulty condition of the elevator system, this embodiment gets the fault prediction and detection device 85 to admit the input of the control signal for driving the motor 109 and the normal control signal. The fault prediction and detection device 85 then detects the fault of the motor (i.e., irregularities associated with the operation of the motor 109 that is the control equipment in this case). The device 85 thus makes fault predictions about the equipment that is apparently in normal operation.

As explained above, the control signal collection device 84 and fault prediction and detection device 85 in Fig. 8 may be either attached to the control panel 102 or installed in the information monitoring center 112, shown in Fig. 10. In any case, the fault prediction detection signal can be verified at the information monitoring center 112.

Thus fault predictions can be made about the elevator opening/closing doors 103 and 104 through remote diagnosis. Given instructions from the information monitoring center 112, the maintenance personnel of the elevator can inspect and maintain the elevator opening/closing doors 103 and 104 before they actually develop a fault. This makes it possible to avert beforehand an emergency stop or other troubles of the elevator system.

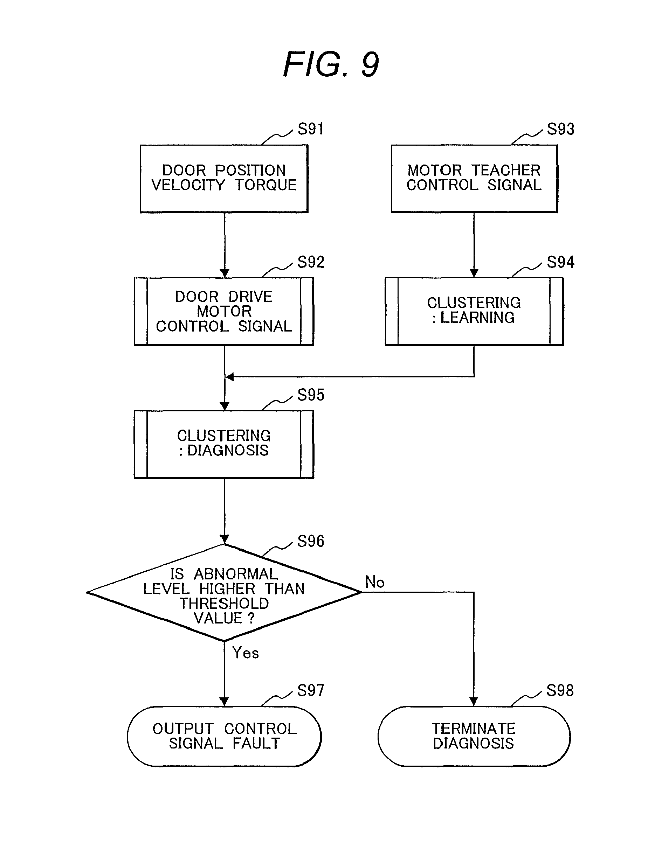

The configuration shown in Fig. 8 was explained above using functional blocks. In practice, diagnosis control may be carried out by a computer. Computer-assisted fault prediction diagnosis of the elevator system is explained below in reference to the flowchart of Fig. 9.

In step S91 of Fig. 9, the door positions, velocity, and torque are detected from the opened/closed door position sensors, velocity sensor, and torque sensor, respectively. In step S92, a motor control signal for driving the elevator opening/closing doors is generated on the basis of the door positions, velocity, and torque thus detected.

In step S93, a motor teacher control signal is generated. In step S94, clustering (learning) is carried out. Clustering is a statistical technique whereby the teacher control signal (i.e., normal control signal) stored in the control signal collection device 84 is used for purpose of learning. Specifically, the statistical feature quantity of the teacher control signal is obtained for the purpose.

In step S95, clustering for diagnosis is performed. In this step, the statistical feature quantity of the motor control signal for driving the doors is calculated. A difference is then calculated between the feature quantity thus calculated and the statistical feature quantity of the teacher control signal obtained earlier in step S94.

With the difference calculated in step S95, step S96 is reached. In step S96, it is determined whether the difference between the statistical feature quantities exceeds a threshold value. If it is determined that the difference exceeds the threshold value, a fault condition is recognized. In this case, step S97 is reached and a control signal fault is output. If it is determined in step S96 that the difference between the statistical feature quantities does not exceed the threshold value, the normal condition is recognized. In this case, step S98 is reached and the diagnosis is terminated.

As explained above, the fourth embodiment constitutes a control system for controlling the opening and closing of the cage doors of the elevator system. The normal control signal is generated based on the motor control signal for driving the elevator opening/closing doors. The motor control signal generated from the operation of the elevator is compared with the normal control signal for evaluation and determination whereby fault predictions can be made about the elevator opening/closing doors. This makes it possible to predict fault conditions before they actually manifest themselves in the form of emergencies such as the elevator opening/closing doors locking passengers in the cage. The embodiment thus promises to enhance the stability of the elevator system in operation.

Features, components and specific details of the structures of the above-described embodiments may be exchanged or combined to form further embodiments optimized for the respective application. As far as those modifications are apparent for an expert skilled in the art they shall be disclosed implicitly by the above description without specifying explicitly every possible combination.

## Claims

1. A control device for use with a control system, said control device calculating operation amounts of control equipment of said control system based on output from sensors (13) detecting operation information and other information on said control system, said control device further outputting said operation amounts to said control equipment as a control signal (Sg11), said control device comprising:
an evaluation means for evaluating a normal control signal (Sg14) in effect when said control system is in normal operation and an actual control signal (Sg11) currently in effect; and
a determination means for determining that said control equipment associated with at least said control signal (Sg11) includes a fault cause or a failure cause if a predetermined degree of association is absent between said normal control signal (Sg14) and said actual control signal upon evaluation by said evaluation means.

2. A control device for use with a control system according to claim 1, further comprising
a control signal collection means (14) for obtaining said normal control signal (Sg14) by performing predetermined calculations on a plurality of said control signals (Sg11).

3. A control device for use with a control system according to claim 1, further comprising
a control signal collection means (14) for obtaining said normal control signal (Sg14) by performing predetermined calculations on a plurality of initial control signals for said control system.

4. A control device for use with a control system according to claim 2 or 3, wherein said control signal collection means (14) includes:
a storage means (21) for storing a predetermined number of control signals (Sg11); and
a normal signal generation means (23) for obtaining said normal control signal (Sg14) by performing predetermined calculations on said predetermined number of said control signals (Sg11) stored in said storage means (21).

5. A control device for use with a control system according to at least one of claims 1 to 4, further comprising
a teacher signal storage means for storing a teacher signal serving as a reference value for said control signal (Sg11) and forming said normal control signal (Sg41).

6. A control device for use with a control system according to claim 5,
wherein said teacher signal is a design reference value associated with said control signal (Sg11).

7. A control device for use with a control system according to at least one of claims 1 to 6,
wherein said normal control signal (Sg14) and said actual control signal are evaluated by said evaluation means and said determination means when said control system is in the same operation state.

8. A control device for use with a control system according to at least one of claims 1 to 7,
wherein said evaluation means has a function of evaluating the degree of association between said normal control signal (Sg14) and said actual control signal, and
wherein said determination means has a function of determining the degree of said fault cause or said failure cause in accordance with the degree of association evaluated by said evaluation means.

9. An elevator system comprising an elevator opening/closing door (103, 104) provided at an elevator cage (101), a motor (109) for driving said elevator opening/closing door (103, 104), and a control device for obtaining a control signal (Sg11) of said motor (109) based at least on the velocity and torque of said motor (109) and on the position of said elevator opening/closing door (103, 104);
wherein said control device includes:
a normal motor control signal generation means for obtaining a normal motor control signal from said control signal (Sg11) of said motor (109);
an evaluation means for evaluating said normal motor control signal and an actual motor control signal currently in effect; and
a determination means for determining that at least said motor (109) includes a fault cause or a failure cause if a predetermined degree of association is absent between said normal motor control signal and said actual motor control signal upon evaluation by said evaluation means.

10. An elevator system according to claim 9, wherein said control device is linked with an information monitoring center (112) via a communication network (111), said information monitoring center (112) including at least said evaluation means, said determination means, and a display means (115) for displaying a result of the determination made by said determination means.

11. An elevator system according to claim 9 or 10,
wherein said control device is linked with an information monitoring center (112) via a communication network (111);
wherein at least said evaluation means and said determination means are included in a hoistway accommodating an elevator cage (101), and
whereinsaidinformation monitoring center(112)includes a display means (115) for displaying a result of the determination made by said determination means.

12. An elevator system according to claim 10 or 11,
whereinsaidinformation monitoring center(112)includes a fault prediction storage means for storing a fault prediction detection signal output from said determination means.
